# EUROPEAN PATENT SPECIFICATION

(11) **EP 4 045 796 B1**
(45) Date of publication and mention of the grant of the patent: **01.05.2024**
(21) Application number: 20807367.6
(22) Date of filing: 13.11.2020
(51) Int. Cl.: F03D 80/80

(54) **NACELLE FOR A WIND TURBINE**
GONDEL FÜR EINE WINDTURBINE
NACELLE DESTINÉE À UNE ÉOLIENNE

(30) Priority: 15.11.2019 DK PA201970699; 24.04.2020 DK PA202070252; 24.04.2020 DK PA202070253; 24.04.2020 DK PA202070254; 11.09.2020 DK PA202070587
(43) Date of publication of application: 24.08.2022
(73) Proprietor: Jupiter Bach A/S, 4600 Køge (DK)
(72) Inventor: RAIMUND, Ulrik, 4793 Bogø By (DK)
(74) Representative: Page White Farrer
(86) International application number: PCT/EP2020/082112
(87) International publication number: WO 2021/094570

(56) References cited:
- EP-A1- 2 428 676
- US-A1- 2009 129 931

## Description

The present invention relates to a nacelle for a wind turbine.

A wind turbine converts the kinetic energy in the wind into mechanical power by means of a rotor coupled to main machinery components. Wind turbines comes in various sizes ranging from small wind turbines to very large turbines, the majority of which are large three-bladed horizontal-axis wind turbines (HAWT). The large wind turbines are high and have a very large numbers of main machinery component groups and subcomponents installed on a frame inside the nacelle cover. Wind turbines from different manufacturers have different frames and arrangements of machinery to fit inside the various designs of composite nacelle cover, which designs have an impact on the arrangement of the machinery as well.

One of the largest components located inside the nacelle cover of a wind turbine is the load-carrying frame, which is also known to be one of the most critical components of the wind turbine. The load-carrying frame typically consists of a rear frame part, a front frame part, and optionally a generator frame part, which frame parts are installed in the nacelle cover to carry and support many of the components and machinery that transform the wind's kinetic energy conferred to the rotor into mechanical energy to turn a generator that produces electric power. The components and machinery are hitherto installed on the load-carrying frame, which is then lifted into the nacelle cover, secured to the nacelle cover and aligned with the rotor to be put in operative condition to gain electric power. The front frame part and the optional general frame part may be referred to as the bed plate frame and the rear frame part may be referred to as the main frame.

The load-carrying frame is typically a cast steel frame or a steel frame bolted together, and thus very heavy, and expensive to manufacture. Moreover, said load-carrying frame must be subjected to expensive quality control and non-destructive testing. The load-carrying frame are also expensive, strenuous, and time-consuming to transport to the erection site, as well as to lift into the nacelle cover with the components and machinery supported on the load-carrying frame, as dealt with in US-B-7793964 and EP-A-3246561, respectively.

In a typical wind turbine, the hub is secured to the front of the nacelle cover with the blades directly bolted to the hub, or bolted to the hub via a pitch bearing. The yaw system, mainshaft bearing, gearbox, generator, transformer and electrical control cabinets are behind the hub and conventionally mounted on the front frame of the nacelle.

The load-carrying frame can e.g. be made as two heavy main cast and/or welded steel parts, wherein e.g. the yaw system, main shaft, and optionally the gearbox, are secured to the front frame part, and the transformer, and electrical cabinets are secured to the rear frame part. The generator can conventionally be secured to any of the front frame part and the rear frame part. Once the yaw system passes its rotational test and its motors are installed and pass their functional tests, the front frame part and rear frame part are joined by heavy bolts. The entire load-carrying frame assembly with its machinery and other components is then attached by brackets to the walls of the fiber-reinforced composite nacelle cover.

EP-A-2322795 describes an example of a load-carrying frame installed in a nacelle cover.

A load-carrying frame is thus disposed within the nacelle cover to carry and support the main machinery components of the wind turbine using a plurality of brackets mounted at an upper and a lower portion of the load-carrying frame to secure the load-carrying frame to the nacelle inner.

EP-A-2428676 discloses a nacelle cover for a wind turbine which comprises a series of progressively smaller cladding components of octagonal cross-section which are fitted to a support frame of the nacelle by bolts which comprise an external head and an internal nut. Each cladding component comprises an upper half portion fitted to an upper part of the support frame and a lower half portion fitted to a lower part of the support frame. The series of cladding components are fitted so that an end of a smaller cladding component is received within the end of an adjacent larger cladding component.

US patent application no.2009/129931 A1 discloses a nacelle of a wind turbine, which comprises several modules which are separately designed and manageable, and each module comprises a housing part. The modules are assembled to form the nacelle, which comprises a housing formed from the connected housing parts.

The wind industry is always in demand of ways to reduce production costs and to improve the ways a wind turbine is produced, so it is a main aim of the present invention to reduce production costs of a wind turbine.

There is also a continuing need to reduce the carbon footprint of engineered structures and to enhance the sustainability of any engineering development, for example the installation of wind turbines.

Another aim of the present invention is to provide a wind turbine, for which the amount of steel for manufacturing the load-carrying frame can be reduced.

A further aim of the present invention is to provide a nacelle having a substantially smaller, typically substantially shorter load-carrying frame than the interior length of the composite nacelle cover.

A still further aim of the present invention is to provide a nacelle, which is less heavy than hitherto known.

In one aspect, the present invention provides a nacelle for a wind turbine, wherein the nacelle comprises a nacelle cover formed by an elongate housing defining an interior space for containing machinery components of the wind turbine, the housing having a front end mounted to a tower of the wind turbine, and an opposite rear end, wherein the elongate housing comprises a fibre-reinforced polymer composite material. The front end of the housing is mounted on a structural frame which is affixed to the tower, and the front end is fitted to the structural frame by a plurality of fitting assemblies. At least one of the plurality of fitting assemblies comprises a first mount on the housing which defines a first hollow bore extending therethrough, a second mount on the structural frame which defines a second hollow bore extending therethrough, the first and second hollow bores being aligned along a common axis, and an elongate pin fitted within the first and second hollow bores. The elongate pin comprises an elongate body portion having at one end thereof an integral, unthreaded head element which has a width greater than a width of the elongate body portion, the head element being fitted to the first mount, and at the opposite end thereof a securing element affixed to the elongate body portion whereby the elongate pin is captive in the first and second hollow bores by the head element and the securing element and affixes the housing to the structural frame.

In accordance with the present invention, the structural frame comprises a bed plate frame and the bed plate frame supports at least one part of a drive train of the wind turbine, and the fitting assemblies comprise first and second front fitting assemblies on respective opposite longitudinal sides of the housing and third and fourth rear fitting assemblies on respective opposite longitudinal sides of the housing, wherein the rear fitting assemblies are longitudinally spaced along the housing in a direction towards the rear end relative to the front fitting assemblies, and wherein each of the first and second front fitting assemblies, or each of the third and fourth rear fitting assemblies, or all of the first and second front fitting assemblies and the third and fourth rear fitting assemblies, respectively comprise a respective first mount, second mount, elongate pin and securing element, wherein the second mount of each of the first and second front fitting assemblies is on the bed plate frame.

In the preferred embodiment of the present invention, the structural frame may further comprise a main frame which is fixed to the bed plate frame, the main frame extending in a longitudinal direction along the housing towards the rear end, wherein the main frame supports at least one part of the drive train of the wind turbine, and the second mount of each of the third and fourth rear fitting assemblies is on the bed plate frame or the main frame.

Preferred or optional features are defined in dependent claims 2 to 15.

In accordance with the present invention, the nacelle cover is fitted to the structural frame by a plurality of fitting assemblies and at least one, preferably all, of the fitting assemblies comprises an elongate pin which has an integral head element fitted to the housing of the nacelle cover by an unthreaded connection. This means that no external bolt or nut of the fitting assembly needs to be provided, which is located at the external surface of the housing. Consequently, no bolt or nut of the fitting assembly is exposed to external weather conditions, which could cause degradation e.g. by corrosion, over extended service periods, typically up to 25 years. Also, since there is no exterior bolt/nut fitting, there is no need to tighten any exterior fitting, should it become loosened during service, by accessing the exterior of the nacelle cover, which obviously may be hazardous since a nacelle cover of a wind turbine is typically many tens of metres above the ground, or sea. In the embodiments comprising a threaded securing element, this is provided at the inner end of the elongate pin, within the interior space of the housing, and the interior threaded securing element can readily be accessed by service personnel within the interior space in the event that tightening of the threaded securing element to the elongate pin is required.

In accordance with the present invention, an elongate pin is provided to affix the housing to the structural frame which does not have threaded bolt/nut connections at opposite end of the fitting. When such opposite threaded bolt/nut connections are provided, the bolt is in tension and the friction between the threaded nuts and the threaded bolt provide the load transfer between the housing and the structural frame. In accordance with the present invention, the elongate pin has an integral, unthreaded head element which is fitted to the first mount on the housing. Consequently, at least part of the load between the housing and the structural frame is carried by the shear strength of the elongate body portion, i.e. the shaft, of the elongate pin. The shear load and shear strength can readily be calculated, enabling a desired diameter of a shaft of a given material to be easily determined, and these parameters do not reduce over time as a result of reduced tension, which otherwise in a threaded bolt can be caused by loosening of a nut over time.

Thus the elongate pin fitting in accordance with the present invention is very easy and inexpensive to design, install and maintain over an extended service life, and is less likely to require adjustment during service than a conventional threaded bolt having threaded nuts fitted at opposite ends.

Furthermore, in accordance with the preferred embodiments of the present invention, for each fitting assembly the elongate pin is the sole fitting element in the respective fitting assembly which affixes the housing to the structural frame. The use of a single elongate pin significantly reduces the cost and complexity of installing a nacelle cover on a structural frame, as compared to the use, for example, of a ring, typically a polygonal (e.g. square) array, of threaded bolts, and associated nuts on opposite ends of the bolts, fitting a reinforced part of the housing to the structural frame.

When the fitting assembly comprises a polygonal array of threaded bolts, not in accordance with the present invention, the housing must be accurately positioned so that the bolt holes of the array in both the housing and the structural frame are aligned, which requires the housing to be translationally and rotationally positioned with high accuracy relative to the structural frame. Moreover, if there are plural such fitting assemblies, all of the fitting assemblies require accurate alignment simultaneously.

In contrast, when the fitting assembly comprises a single elongate pin, this single elongate pin can more easily be positioned translationally relative to the structural frame. When the elongate body portion and the integral, unthreaded head element are symmetric about a longitudinal axis of rotation of the elongate pin, the elongate pin can rotate in the second mount. Consequently, initially two opposite fitting assemblies can be aligned and then fitted between the housing and the structural frame. Thereafter, additional fitting assemblies can be aligned and then fitted between the housing and the structural frame. By providing that the single elongate pin can rotate in the second mount, there is no need simultaneously to align all of the fitting assemblies, and the associated parts of the housing and the structural frame, prior to installing any of the fitting assemblies between the housing and the structural frame.

Furthermore, in accordance with the preferred embodiments of the present invention, the head element is captive and translationally fixed within a blind cavity in the first mount on the housing. This can provide that the blind cavity can be opened to permit removal of the head element from the blind cavity in a direction into the interior space. In the event that the elongate pin requires replacement, or the housing is to be disassembled from the tower, the elongate pin can easily be removed, and is desired replaced by a new elongate pin, by service personnel working within the interior space.

In the preferred embodiments of the present invention, the housing supports at least one machinery component of the wind turbine which is mounted on the housing at the rear end, and the housing comprises a structural tube which functions as a vertically displaceable cantilever beam carrying the load of the at least one machinery component mounted thereon. Therefore the fitting assemblies support the turning moment load of the cantilever beam.

In the preferred embodiments of the present invention, at least some of the machinery and operative components of the wind turbine that converts the kinetic energy of the wind into electrical power are installed inside the composite nacelle cover by being secured directly or indirectly to the composite wall of the composite nacelle cover, e.g. by means of brackets and bolts, and only a first part of main machinery components are supported on the structural, load-carrying frame. Some of the main machinery components located towards the rear end of the nacelle cover can be secured directly or indirectly to the composite wall of the composite nacelle cover, the composite wall including one or more of the sidewalls, floor or roof of the composite nacelle cover, at selected securing points and locations. In other words the composite nacelle cover has at least one main machinery component secured to the composite wall of said composite nacelle cover instead of to a structural, load-carrying frame.

Within the scope of the present invention the term "nacelle cover" is understood to mean the part of the wind turbine that houses the main machinery, and to which the rotor is mounted at a front end. Typically the composite nacelle cover has a bottom hole that is aligned with a hole in a bed plate at the top of the tower. The hole in the bed plate is correspondingly aligned with a hole at the top of the tower, which typically is centrally located (plus a tolerance) with respect to the external dimensions of the top of the tower.

Within the scope of the present invention the term "composite" means a made from two or more constituent materials with significantly different physical or chemical properties that, when combined, produce a material with characteristics different from the individual components. The "composite" preferably includes a polymer matrix reinforced with fibers. Fibre-reinforced polymers may be thermosetting polymers, e.g. carbon-fibre-reinforced polymer (CFRP) and glass-reinforced plastic (GRP). The plastic composite may be used in a laminate having a core, such a foam core, e.g. a polyurethane foam core of a honeycomb structure, sandwiched between opposite composite face skins, thereby providing thickness and structural strength to the laminate, and thus to a wall of a composite nacelle cover made of such laminate.

Within the scope of the present invention the term "bed plate" or "bed plate frame" means the transition piece of the load-carrying frame located inside the composite nacelle cover and connecting the main bearing(s), the shafts, the generator, and optionally the gearbox if present, towards the rotor at one side, and the yaw bearing towards the tower on the other side. The terms "bedplate" and "bed plate frame" are used interchangeably in the following description.

Within the scope of the present invention the term "main machinery components", "main components", and "machinery" are used interchangeably for the components including but not limited to the main support, yaw system, brakes, cooling system, transformer, current converter and current inverter, computer, electrical control cabinets, and the drive train including the low-speed shaft (main shaft), the gearbox, the high-speed shaft, shaft bearings, and the generator.

In the preferred embodiments of the present invention, the composite housing constitutes a first load-carrying structure for the main machinery component(s) which are secured to the composite wall of the composite nacelle cover. By securing some of the main machinery components to the composite wall of the composite nacelle cover, e.g. to the floor and/or sides and/or roof of the composite nacelle cover, instead of to a structural, load-carrying frame, a lot of heavy steel for manufacturing said load-carrying frame can be dispensed with, as well as costs and many man-hours for testing the conventionally long load-carrying frame can be saved.

In the preferred embodiments of the present invention, a main frame is fixed to the bed plate frame which together form a structural, load-carrying frame for supporting at least one component of the main machinery components of the wind turbine. The load-carrying frame constitutes a second load-carrying structure for the main machinery components not being secured to the composite wall of the composite nacelle cover. It is however preferred to support as few components of the second part of the main machinery components as possible on the load-carrying frame, and instead utilize the composite nacelle cover wall as a primary load-carrying structure.

The composite nacelle cover can be a fibre-reinforced polymer composite nacelle cover, preferably a fiber-reinforced composite nacelle cover having opposite fibre-reinforced polymer face skins laminating a foam core, i.e. a sandwich construction as is well known in the art of composite materials. The fibre-reinforced composite may comprise glass fibre, carbon fibre, natural fibre or any other suitable fibre; the polymer resin to form the matrix may comprise a thermoplastic or thermosetting resin, for example an epoxy resin or a vinylester resin. Any suitable fibre-reinforced resin matrix polymer composite material known for use in manufacturing wind turbines may be used.

Metal nacelle covers are explicitly excluded, and do not form part of the present invention. Drilling holes for brackets for securing of main machinery components in a metal nacelle wall provides a basis and a path for rust formations and corrosive attack due to humidity always present in the surroundings. Expensive precautionary provisions, actions and processes are required to avoid these consequences, such as additional post processes, such as painting and frequent shifting of many bolts and brackets, as well as extra surveillance to observe consequences early. Also metal, e.g. steel, nacelle covers can suffer from fatigue problems. Thus metal nacelle covers are not appropriate for the present invention.

In the preferred embodiments of the present invention, the part of the structural, load-carrying frame that constitutes the second load-carrying structure can be at least a front part of the main frame, or the entire main frame, and all or part of the bed plate frame. The second load-carrying structure can support machinery components which are part of the drive train, optionally also the yaw system or a part of the yaw system. The length of the main frame can be reduced compared to conventional main frames, and still provide sufficiently safe and strong support, as just a part of the entire load-carrying structure, still keeping e.g. the drive train properly aligned.

In accordance with the preferred embodiments of the present invention, in the nacelle cover no rear frame is provided, i.e. no metal frame is located at the rear end of the composite housing. The main frame is fixed rearward of the bed plate frame, and extends rearwardly but terminates a sufficient distance from the rear end of the housing to permit machinery component(s) to be fitted to the composite housing rearwardly of the main frame. This reduces the weight of the metal frame required to support the machinery component(s) as compared to known metal frames.

Within the scope of the present invention main machinery components can be implemented in a multiplicity of other kinds of composite nacelle covers using only a part of the total length of the structural, load-carrying frame for said composite nacelle cover as compared to known load-carrying frames. The present invention is suited for both complex and simple composite nacelle cover designs. The present invention may reduce the overall length of the nacelle, and the nacelle may in the long view be made shorter due to the invention offers a better utilization of the interior space of the composite nacelle cover. This way the invention may save even further production costs for the wind energy industry.

Furthermore, the present invention may reduce the width and/or height of the nacelle by achieving a better utilization of the interior space of the composite nacelle cover. The reduced width and/or height dimensions can significantly reduce transport costs for transporting an assembled nacelle cover to an installation site.

In a typical embodiment of the present invention, the main machinery components secured to the composite housing, acting as a first load-carrying structure, may be one or more of the transformer, cooling system and/or the electrical control cabinet(s). Additional components, such as a crane for lifting machinery components into or out of the composite housing, may be secured to the composite housing.

The main machinery components to be supported by the composite housing can be lifted separately and quickly into the nacelle cavity as individual main machinery component(s), which process of course is less heavy and complicated than when lifting the combined installation of all main machinery components pre-mounted on a single enlarged load-carrying frame. Once inside the composite nacelle cover, each component of the main machinery components can subsequently be secured to the wall of the composite nacelle cover. The main machinery components of the wind turbine that are fitted to at least a part of the load-carrying frame can be lifted in conventional manner inside the composite nacelle cover, but this assembled structure is still much less heavy and easier to lift than if a fully equipped load-carrying frame is lifted.

In conventional wind turbines all parts of main machinery components are lifted in common on a load-carrying frame, which put a high demand on the ways the parts must be secured to the load-carrying frame in order not to displace to any extent at all in relation to each other, or drop off the load-carrying frame during lifting. When fewer parts of main machinery need to be lifted in common the lifting process is less vulnerable to failure and wind influences. A separate component of the first part of main machinery components only needs to be secured to the load-carrying composite nacelle cover wall at few points.

The preferred embodiments of the present invention also provide freedom to install individual components on other positions inside the composite nacelle cover than previously defined and dictated by the conventional load-carrying frame composed of both a bed plate frame and a main frame. Thus the interior positioning arrangement of main machinery components, and the design of said arrangement, can, provided that the mechanical interaction of main machinery components allow it and is not affected or destroyed, be customized and targeted for each customer and each nacelle design, and easily changed if the demand and possibility arises.

The size of the load-carrying frame can, when used in a composite nacelle cover, be reduced substantially compared to conventional configurations of load-carrying steel frames for conventionally known wind turbine machinery, this way saving a lot of weight. Thus reducing the size, in particular the length, of the load-carrying frame, e.g. by elimination of the main frame, does not only save amounts of steel, the transport costs are also reduced, as well as lifting costs, testing costs, and work time costs. Furthermore, utilization of the interior space of the composite nacelle cover can be optimized and utilized the best possible way.

The load-carrying frame of the composite nacelle cover of the preferred embodiments of the present invention may have a front frame part (a bed plate frame), and only a part of a rear frame part (main frame).

The front frame part can be a steel structure or be manufactured of fiber-reinforced composite.

In a preferred embodiment of the present invention a main machinery component that is not supported onto a load-carrying frame part as the load-carrying structure can simply be secured directly to the wall of the composite nacelle cover by means of securing means, such as bolts and brackets, optionally in combination with an adhesive, and preferably secured at wall points being predetermined by calculations based on models and tests to be particular strong securing points. Thus securing main machinery components to the wall of the composite nacelle cover provides options for securing said main machinery component.

A 3-Dimensional structure of composite nacelle cover that is especially for carrying the load of the machinery components may have substantially flat and straight walls, thus walls without any substantially curving. Optionally such a composite nacelle cover may have a substantially rectangular appearance with a substantially square cross-section.

The preferred embodiment of the present invention can provide a wind turbine comprising a tower and a nacelle at the top of the tower. The wind turbine comprises the composite nacelle cover described above and being equipped with main machinery component(s) preferably secured to the wall of the composite nacelle cover without using a load-carrying frame, thereby substantially reducing overall weight of the nacelle and making the installation of the main machinery components fast and easy. The composite nacelle cover may be secured directly to the top of the tower.

As an example within the scope of the present invention it is intended to reduce the length of the conventional load-carrying frame, typically weighing about 25 tons, by at least about one third.

The invention will now be described by way of example only with references to the accompanying drawings, in which
Figure 1 is a schematic perspective side view from above of a nacelle cover for a wind turbine in accordance with an embodiment of the present invention;
Figure 2 is a schematic cross-sectional side view along line A-A of the nacelle cover of Figure 1 and the interior structure and machinery therein;
Figure 3 is a schematic plan view from above of the nacelle cover of Figure 2 and the interior structure, but with the machinery omitted;
Figure 4 is a schematic exploded perspective cross-sectional view along line B-B illustrating in greater detail one of the fitting assemblies between the nacelle cover and the structural frame shown in Figures 2 and 3 in accordance in accordance with an embodiment of the present invention; and
Figure 5 is a schematic cross-sectional view along line B-B illustrating the assembled fitting assembly shown in Figure 4;
Figure 6 is a schematic exploded perspective view of parts of the fitting assembly shown in Figure 4;
Figure 7 is a schematic perspective view, partly cut away, of two fitting assemblies between the nacelle cover and the structural frame shown in Figures 2 and 3 in accordance with another embodiment of the present invention;
Figure 8 is a schematic exploded perspective cross-sectional view along line B-B, partly cut away, illustrating in greater detail one of the fitting assemblies between the nacelle cover and the structural frame shown in Figure 7;
Figure 9 is a schematic perspective cross-sectional view along line B-B illustrating the fitting assembly of Figure 8;
Figure 10 is a schematic perspective view of a fitting assembly between the nacelle cover and the structural frame shown in Figures 2 and 3 in accordance with a further embodiment of the present invention;
Figure 11 shows a perspective cross-section through the fitting assembly shown in Figure 10; and
Figure 12 shows an orthogonal cross-section through the fitting assembly shown in Figure 10.

When a main machinery component, whether it being the first part, the second part or both said parts, is secured to a sidewall of the composite nacelle cover this should not be construed as limiting the scope of the present invention. Such a component could quite as well be secured to the floor, end walls, or even to the roof, although not to the hatch.

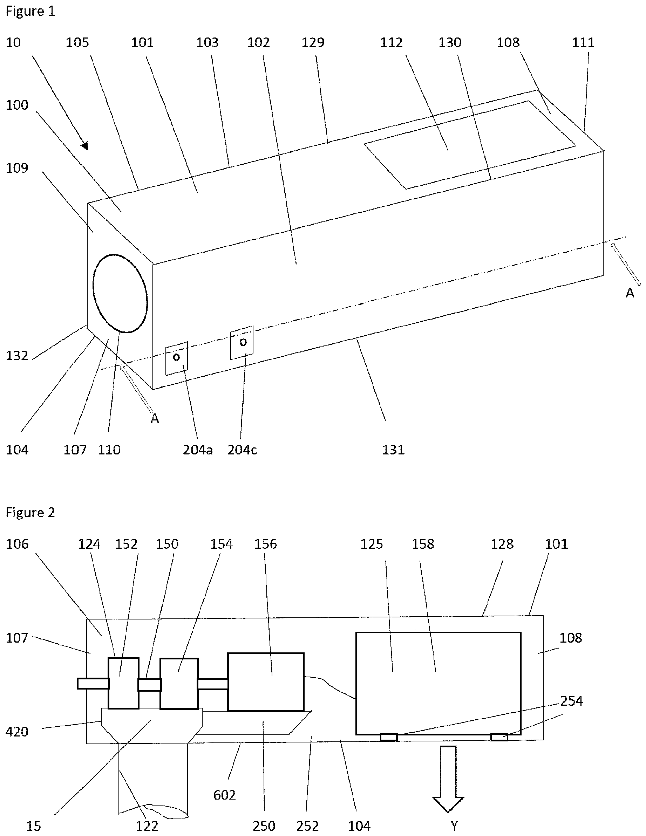

Referring to Figures 1 to 3, there is schematically illustrated a nacelle 10 comprising a nacelle cover 100 for a wind turbine in accordance with an embodiment of the present invention. In Figures 1 to 3, the dimensions of the various structural features are not to scale and are illustrated in an exaggerated form for clarity of illustration. Also, for clarity of illustration only Figure 2 shows the machinery components of the wind turbine.

The nacelle cover 100 comprises a roof 101, opposite sidewalls 102, 103 and a floor 104 assembled together to form a composite material elongate housing 105 defining an interior space 106. The interior space 106 in use contains machinery components of the wind turbine. For example, in a typical wind turbine, the hub (not shown) is secured to the front end 107 of the nacelle cover 100 with the blades directly bolted to the hub, or bolted to the hub via a pitch bearing. In the embodiment of the present invention, the yaw system, mainshaft bearing, gearbox, generator, transformer and electrical control cabinets are behind the hub and mounted within the nacelle cover 100.

The housing 105 has a front end 107 for mounting to a tower (not shown) of the wind turbine (not shown), and an opposite rear end 108. A front end wall 109, preferably flat, is illustrated as being vertical but may be upwardly inclined and has a front hole 110 for securing the rotor (not shown) of the wind turbine. A rear end wall 111 closes the rear end 108. In the illustrated embodiment the rear end wall 111 is vertical, but may have any other desired shape and configuration.

The roof 101 is typically provided with one or more detachable panels 112 to enable the panels to be removed temporarily after installation of the wind turbine when it is required to replace any of the machinery components mounted within the nacelle cover. It is conventional to use a crane to access the interior space 106 via the roof 101 by removing one or more detachable panels 112 from the roof 101.

The floor 104 has a bottom hole 113 for securing the nacelle cover 100 in accessible communication with the tower 122 of the wind turbine to provide access to the interior space 106 of the nacelle cover 100 from the tower.

Each of the roof 101, the opposite sidewalls 102, 103 and the floor 104 comprise a fibre-reinforced polymer composite material. Preferably, each of the front end wall 109 and the rear end wall 111 also comprise a fibre-reinforced polymer composite material.

Each of the roof 101, the opposite sidewalls 102, 103 and the floor 104 comprise a respective wall element comprising an assembly of a plurality of panels which have been joined together to form a respective elongate row of panels. Preferably, each of the front end wall 109 and the rear end wall 111 also comprise an assembly of a plurality of panels comprised of a fibre-reinforced polymer composite material. Each panel comprises fibre-reinforced polymer composite material, and typically comprises a planar wall part reinforced by structural beams affixed to or integral with the planar wall part.

In one embodiment, the composite nacelle cover 100 may have a panel structure as disclosed in the Applicant's WO-A-2019/034214 in which each wall element comprises an assembly of plural sandwich panels comprising opposite skins of fibre-reinforced polymer composite material laminated to a foam core.

In the illustrated embodiment, the opposite sidewalls 102, 103 are flat, but may be three-dimensionally shaped. The roof 101 may be flat or upwardly bowed about a radius of curvature within the range of from infinity to 16 m. An upwardly bowed surface assists run-off of rain and sliding of snow from the roof 101 to minimise excess snow loads on the nacelle cover 100 during winter weather conditions. The floor 104 is flat, or alternatively downwardly bowed about a radius of curvature within the range of from infinity to 16 m.

In accordance with the present invention, the front end 107 of the housing 105 is mounted on a structural frame 15. The structural frame 15 comprises a bed plate frame 420, and optionally also a main frame 250.

The bed plate frame 420 is affixed to the tower 122 as is conventional to those skilled in the art of wind turbine manufacture and construction. The front end 107 is fitted to the bed plate frame 420 by at least one fitting assembly 204. In the illustrated embodiment, there are four fitting assemblies 204, comprised of two fitting assemblies 204 longitudinally spaced along a respective sidewall 102, 103.

The bed plate frame 420 supports at least one part of a drive train 124 of the wind turbine, the drive train being shown highly schematically by a box in Figure 2.

The main frame 250 is fixed to the bed plate frame 420 and extends in a longitudinal direction along the housing 105 towards the rear end 108. The main frame 250 also supports at least one part of the drive train 124 of the wind turbine.

The main frame 250 comprises a pair of beams 640, 642, typically steel I-beams, which extend from the bed plate frame 420 in the longitudinal direction and are spaced from each other in a transverse direction orthogonal to the longitudinal direction. Each beam 640, 642 has a free end 644 which is longitudinally spaced from both the front end 107 and the rear end 108. Accordingly, the main frame 250 extends partly along the length of the housing 105 and terminates, for example, at a central part 252 of the housing 105. The beams 640, 642 may be reinforced by one or more transverse steel struts (not shown). The main frame 250 may be fixed to the bed plate frame 420 by any suitable fixing mechanism, such as by welding or by bolts (not shown).

The housing 105 supports at least one machinery component 125 of the wind turbine which is mounted on the housing 105 at the rear end 108. The free ends 644 of the beams 640, 642 of the main frame 250 are located nearer to the front end 107 of the housing 105 than the at least one machinery component 125 of the wind turbine, i.e. the at least one machinery component 125 is not supported by the main frame 250.

At least one machinery component 125, again shown highly schematically by a box in Figure 2, may be mounted on the inner surfaces of the opposed sidewalls 102,102 of the housing 105 at a position laterally spaced from the main frame 250 in a longitudinal direction along the housing 105. The at least one machinery component 125 is part of, or mechanically and/or electrically connected to, the drive train 124.

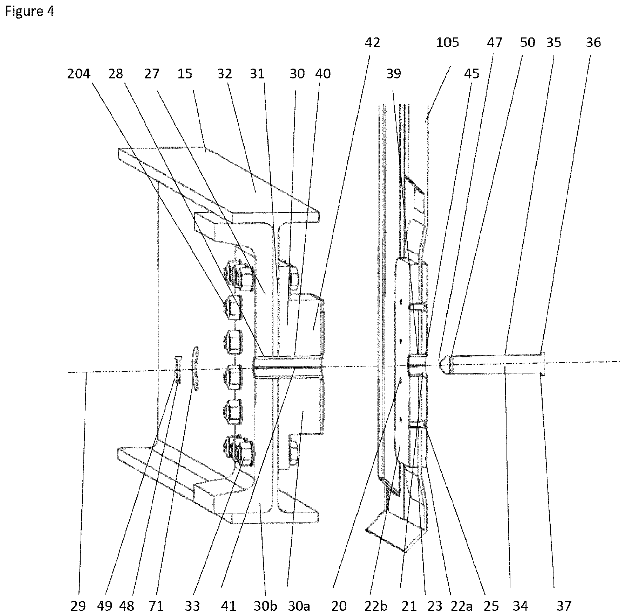

With additional reference to Figures 4 to 6, in accordance with the present invention, the fitting assemblies 204 comprise first and second front fitting assemblies 204a, 204b on respective opposite longitudinal sides of the housing 105 and third and fourth rear fitting assemblies 204c, 204d on respective opposite longitudinal sides of the housing 105. The rear fitting assemblies 204c, 204d are longitudinally spaced along the housing 105 in a direction towards the rear end 108 relative to the front fitting assemblies 204a, 204b.

In Figures 1 to 3, the first and second front fitting assemblies 204a, 204b and the third and fourth rear fitting assemblies 204c, 204d are illustrated as being fitted to the bed plate frame 420. This structure may be provided when there is a main frame 250 as illustrated or when no main frame 250 is present. However, when the main frame 250 is also present, at least the third and fourth rear fitting assemblies 204c, 204d may be fitted to the main frame 250 of the structural frame 15 rather than to the bed plate frame 420. In alternative embodiments, additional fitting assemblies may be provided in addition to the first to fourth fitting assemblies, and these additional fitting assemblies may be fitted to any part of the structural frame 15.

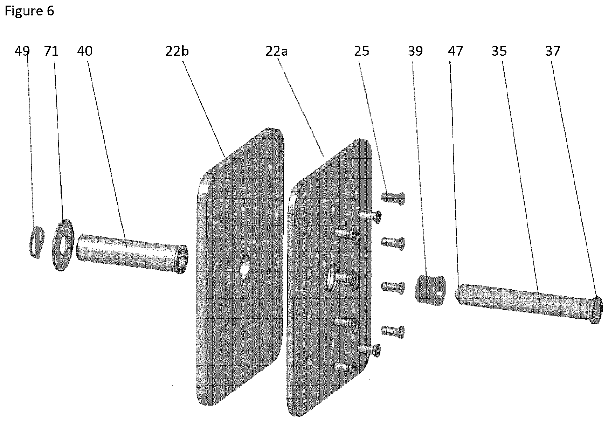

Each of the first and second front fitting assemblies 204a, 204b, or each of the third and fourth rear fitting assemblies 204c, 204d, or preferably all of the plurality of fitting assemblies 204 comprises the structure shown in Figures 4 to 6, in which a first mount 20 on the housing 105 defines a first hollow bore 21 extending therethrough. The first mount 20 comprises outer and inner reinforcing plates 22a, 22b, optionally composed of metal such as steel, which are respectively fitted to outer and inner surfaces of the housing 105. The outer and inner reinforcing plates 22a, 22b sandwich a wall portion 23 of the housing 105 therebetween to define the first hollow bore 21 which extends, in an inwardly direction, through the outer reinforcing plate 22a, the wall portion 23 and the inner reinforcing plate 22b. The outer and inner reinforcing plates 22a, 22b are affixed together by at least one fixing member 25, typically a plurality of threaded screws shown in detail in Figure 6, and/or are affixed to the wall portion 23 by respective layers of adhesive.

A second mount 27 is provided on the structural frame 15. The second mount 27 defines a second hollow bore 28 extending therethrough. In the assembled fixing assembly 204, the first and second hollow bores 21, 28 are aligned along a common axis 29.

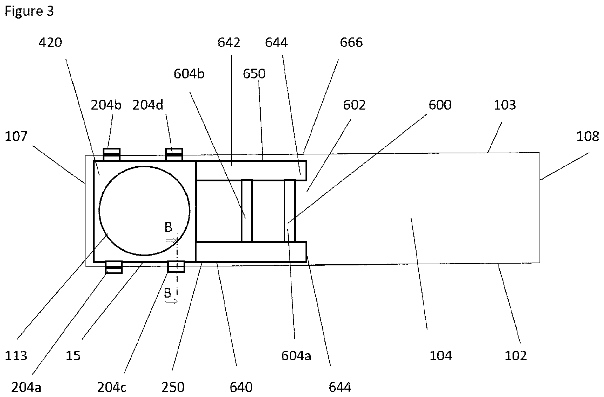

In the embodiment of Figures 4 to 6, the second mount 27 comprises a reinforcing block member 30 which is fitted to the structural frame 15. As illustrated, in this embodiment the reinforcing block member 30 is fitted to a central portion 31 of a beam 32, such as beams 640, 642 shown in Figure 3, of the structural frame 15. The reinforcing block member 30 may be affixed to the beam 32 by threaded bolt and nut fittings 33.

An elongate pin 34 is fitted within the first and second hollow bores 21, 28. In the illustrated embodiment, the elongate pin 34 extends through the outer and inner reinforcing plates 22a, 22b, and the wall portion 23 of the housing 105, and also through the reinforcing block member 30 and the central portion 31 of the beam 32 of the structural frame 15.

The elongate pin 34 comprises an elongate body portion 35, in the form of a shaft. The elongate body portion 35 has at one end 36 thereof an integral, unthreaded head element 37 which has a width greater than a width of the elongate body portion 35. The elongate body portion 35 and the integral, unthreaded head element 37 are symmetric about a longitudinal axis of rotation 29 of the elongate pin 34, whereby the elongate body portion 35, or shaft, is cylindrical.

In the illustrated embodiment, each of the first and second hollow bores 21, 28 is lined with a respective first or second tubular elongate bushing 39, 40 into which the elongate pin 34 is slidably received. Each of the first and second tubular elongate bushings 39, 40 may optionally comprise an elongate lubrication channel 41 on the internal cylindrical surface 42 for receiving a lubricant which in use lubricates the elongate pin 34 within the first and second hollow bores 21, 28. Additionally or alternatively, each of the first and second tubular elongate bushings 39, 40 may be coated with a PTFE (e.g. Teflon ^{®}) layer to provide smooth sliding of the elongate pin 34 in the bushings 39, 40.

During assembly, the elongate pin 34 is slidably inserted into the first and second hollow bores 21, 28 along a direction from the outer surface 43 of the housing 105 towards the interior space 106. The elongate pin 34 can rotate in the first and second hollow bores 21, 28.

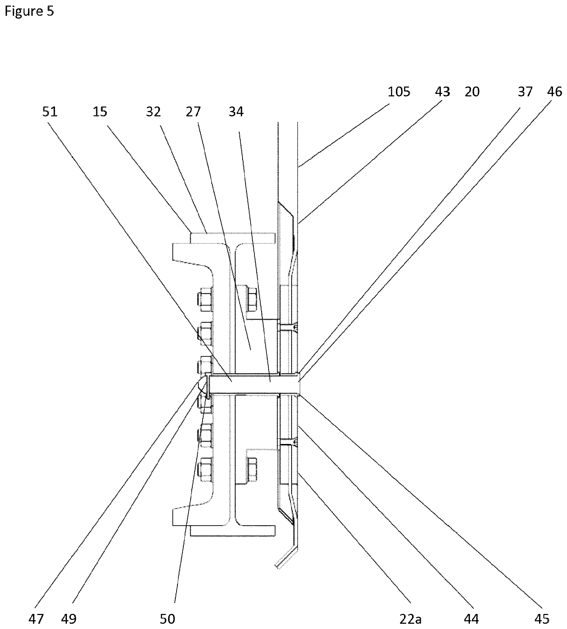

The elongate pin 34 is inserted until the head element 37 is fitted to the first mount 20. The head element 37 is fitted, directly or indirectly (e.g. via a washer (not shown), against an outer surface 44 of the first mount 20. As shown in Figure 5, the head element 37 is fitted against the outer reinforcing plate 22a, which may optionally be provided with a recess 45 for receiving the head element 37. The head element 37 therefore has an exposed outer face 46 surrounded by outer reinforcing plate 22a and the outer surface 43 of the housing 105.

As shown clearer in Figure 6, the opposite end 47 of the elongate body portion 35, a securing element 48 is affixed to the elongate body portion 35. In this embodiment, the securing element 48 comprises a clip 49 which is fitted to a clip-engaging element 50 at the opposite end 47 of the elongate body portion 35. Typically, the clip 49 comprises a spring clip which is removably fitted to the clip-engaging element 50. The spring clip 49 may be a circlip snap-fitted into a groove on the opposite end 47, or alternatively a wire clip extending through a bore in the opposite end 47. A washer 71 is disposed between the securing element 48 and the second mount 27.

The elongate pin 34 is captive in the first and second hollow bores 21, 28 by the head element 37 and the securing element 48 and affixes the housing 105 to the structural frame 15.

The elongate pin 34 is the sole fitting element 51 in the respective fitting assembly 204 which affixes the housing 105 to the structural frame 15.

In the present invention, each of the first and second front fitting assemblies 204a, 204b, or each of the third and fourth rear fitting assemblies 204c, 204d, or preferably all of the first and second front fitting assemblies 204a, 204b and the third and fourth rear fitting assemblies 204c, 204d, respectively comprise a respective first mount 20, second mount 27, elongate pin 34 and securing element 48 as described herein.

Therefore, in the preferred embodiment, the housing 105 is affixed to the structural frame 15 only by four elongate pins 34 as the sole fitting element 51 in each of the respective fitting assemblies 204.

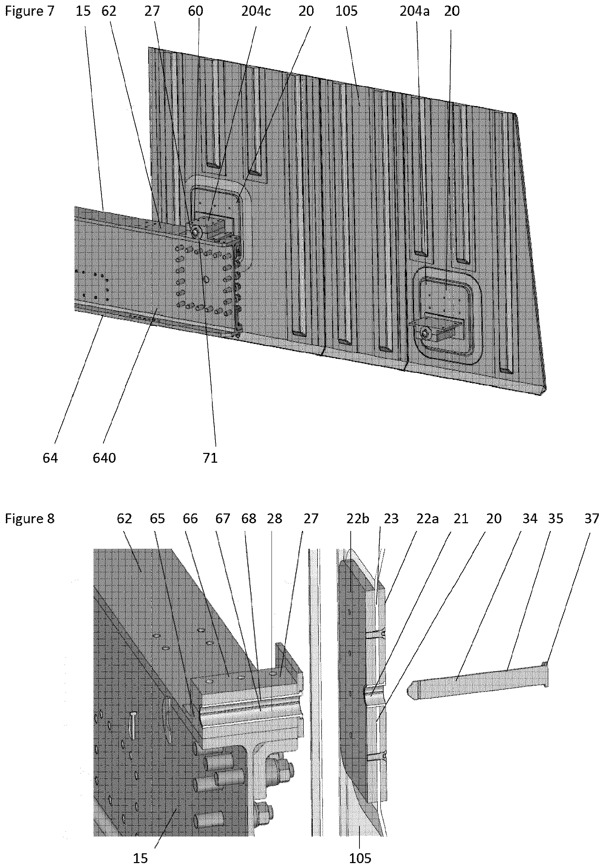

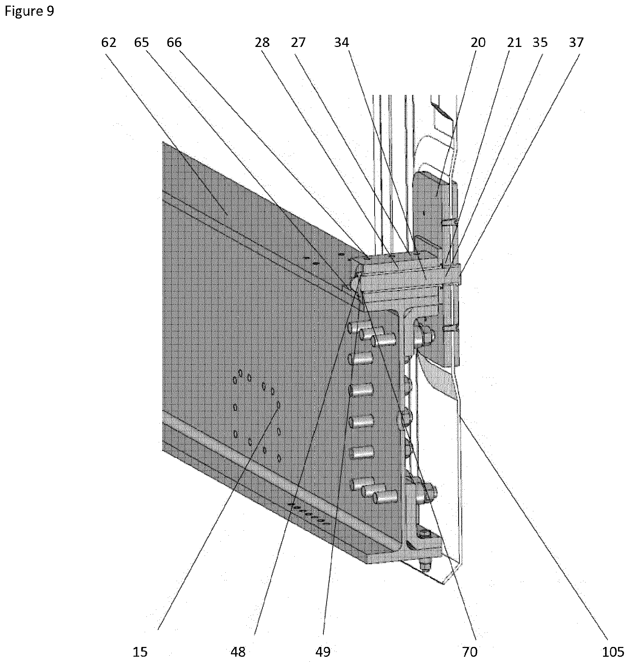

Referring to Figures 7 to 9, a further embodiment of the present invention is illustrated which is a modification of the embodiment of Figures 4 to 6. The second mount 27 is modified as compared to the previous embodiment, but the first mount 20 is the same as for the previous embodiment.

In this further embodiment, at least one second mount 27 comprises a fitting mechanism 60 which is fitted to an upward-facing surface 62 or downward-facing surface 64 of the structural frame 15. In the illustrated embodiment, the location of the second mount 27 on the structural frame 15 of each of the third and fourth rear fitting assemblies 204c, 204d is higher on the structural frame 15 than the location of the second mount 27 of each of the first and second front fitting assemblies 204a, 204b.

In Figure 7, the second mount 27 of each of the third and fourth rear fitting assemblies 204c, 204d comprises a respective fitting mechanism 60 which is fitted to the upward-facing surface 62 of the structural frame 15. The upward-facing surface 62 in this embodiment comprises the upper flange surface of the I-beam structure of beams 640, 642 shown in Figure 3, but alternatively may comprise any other upward-facing surface 62 of the structural frame 15, for example in the bed plate frame 420 or the main frame 250.

Figure 7 also shows one of the first and second front fitting assemblies 204a, 204b, which also comprises a respective fitting mechanism 60. The fitting mechanism 60 is fitted to a downward-facing surface of the structural frame 15. The downward-facing surface is not shown in Figures 7 to 9 but may comprise the lower flange surface 64 of the I-beam structure of beams 640, 642 shown in Figure 3, or alternatively may comprise any other downward-facing surface 64 of the structural frame 15, for example in the bed plate frame 420 or the main frame 250. In Figure 7, the front fitting assembly 204a is fitted to a downward-facing surface (not shown) of the bed plate frame 420 of the structural frame 15.

By providing rear and front fitting mechanisms 60 along each side of the housing 105 and structural frame 15 which are longitudinally spaced and at different heights and moreover are respectively affixed to upward-facing and downward-facing surfaces 62, 64 of the structural frame 15, at least part of the structural turning-moment load between the housing 105 and the structural frame 15 is carried by the shear strength of the structural frame 15 which is between the rear and front fitting mechanisms 60. Such a structure provides a reduced load on the fixing between the fitting mechanism 60 and the structural frame 15.

In the embodiment of Figures 7 to 9, the fitting mechanism 60 comprises a first fitting block 65 affixed to the structural frame 15, for example by threaded bolts or screws (not shown). A second fitting block 66 is affixed to the first fitting block 65, again for example by threaded bolts or screws (not shown). Each of the first and second fitting blocks 65, 66 comprises a respective first or second groove 67, 68. The first and second fitting blocks 65, 66 are affixed together so that the first and second grooves 67, 68 are aligned to define the second hollow bore 28 in the second mount 27.

As shown in Figures 7 to 9, the elongate pin 34 is slid through the second hollow bore 28 in the fitting mechanism 60 and then secured by the securing element 48, which in this embodiment comprises a wire clip 69 snap-fitted into a bore 70 extending through the elongate pin 34, with a washer 71 located between the wire clip 69 and the assembly of the first and second fitting blocks 65, 66.

In accordance with alternative embodiments of the present invention, it is possible to use a first type of second mount 27 as shown in Figures 4 to 6 for one or more of the fitting mechanisms 204 in combination with a first type of second mount 27 as shown in Figures 4 to 6 for the remainder of the fitting mechanisms 204. Any suitable combination may be employed, depending upon the particular structure of the structural frame 15.

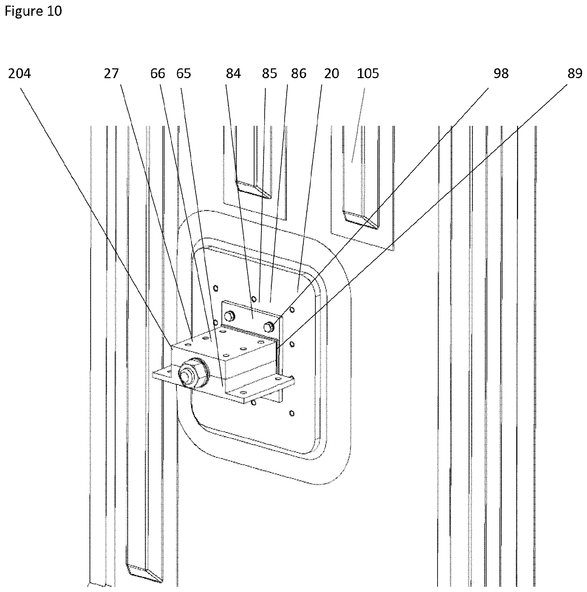

Referring to Figures 10 to 12, a further embodiment of the present invention is illustrated which is a modification of the embodiment of 7 to 9. The elongate pin and the first mount are modified as compared to the previous embodiment, but the second mount is the same as for the previous embodiment.

In this embodiment, and as in the previous embodiments, the elongate pin 72 comprises an elongate body portion 73 having at one end 74 thereof an integral, unthreaded head element 75 which has a width greater than a width of the elongate body portion 73. Preferably, as illustrated, the head element 75 is cylindrical and the inner-facing surface 76 of the head element 75 is chamfered between the elongate body portion 73 and an outer cylindrical surface 77 of the head element 75. The head element 75 is fitted to the first mount 20.

As in the previous embodiments, the first mount 20 on the housing 105 defines a first hollow bore 21 extending therethrough. However, the first mount 20 defines a blind cavity 78 therein. The blind cavity 78 forms a closed end 79 of the first hollow bore 21. The head element 75 is captive and translationally fixed within the blind cavity 78. The blind cavity 78 is located at a position inwardly spaced from the outer surface 43 of the of the first mount 20 Consequently, the elongate pin 72 is entirely located at a position inwardly spaced from the outer surface 43 of the first mount 20, and is therefore not exposed at the outer surface of the housing 105.

As in the previous embodiments, the first mount 20 comprises outer and inner reinforcing plates 80a, 80b, optionally composed of metal such as steel, which are respectively fitted to outer and inner surfaces of the housing 105. The outer and inner reinforcing plates 80a, 80b sandwich a wall portion 23 of the housing 105 therebetween to define the first hollow bore 21 and the blind cavity 78. The outer and inner reinforcing plates 80a, 80b are affixed together by at least one fixing member 25, typically a plurality of threaded screws and/or are affixed to the wall portion 23 by respective layers of adhesive.

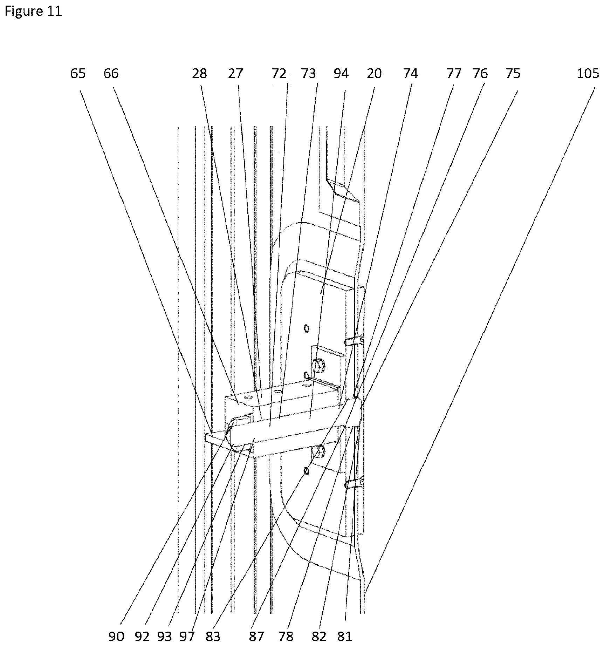

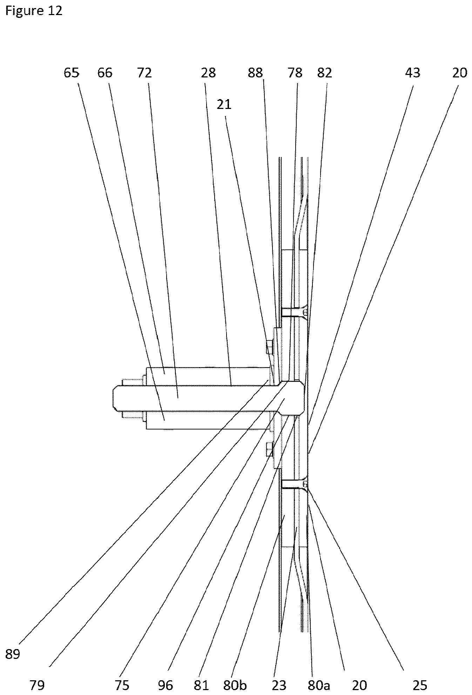

As shown in Figures 11 and 12, the outer reinforcing plate 80a has an inward-facing recess 81 which forms a closed end 82 of the blind cavity 78. The inner reinforcing plate 80b has an enlarged hole 96 defining the main body 83 of the blind cavity 78. The first mount 20 further comprises an inner plate 84 which is affixed to an inner face 85 of the assembly of the outer and inner reinforcing plates 80a, 80b, which comprises an outer part 86 of the first mount 20. The inner plate 84 comprises the first bore 21 and a load-bearing surface 87 which forms an inner end 88 of the blind cavity 78. The inner-facing surface 76 of the head element 78 is fitted against the load-bearing surface 87.

Accordingly, the head element 75 of the elongate pin 72 is securely held captive and translationally fixed within the blind cavity 78.

The inner plate 84 is removably affixed, for example by threaded bolts or screws 98, to the inner face 85 of the outer part 86 of the first mount 20. Accordingly, removal of the inner plate 84 opens the blind cavity 78 and permits removal of the head element 75 from the blind cavity 78 in a direction into the interior space 106.

The elongate pin 72 extends through the second mount 27, which in the illustrated embodiment comprises the fitting mechanism 60 of Figures 7 to 9. However, the second mount 27 may comprise the alternative structure shown in Figures 4 to 6, or any other suitable structure on the structural frame 15 forming a second bore 28.

As illustrated, an elastomeric member 89, preferably a plate of resilient synthetic or natural rubber, is positioned between the first and second mounts 20, 27. The elastomeric member 89 acts to damp any relative movement between, and to minimise wear between, the housing 105 and the structural frame 15, and between the first and second mounts 20, 27. In any of the embodiments of the present invention disclosed herein, such an elastomeric member may be positioned between the first and second mounts.

At the opposite end 97 of the elongate body portion 73 of the elongate pin 72, remote from the head element 75, a securing element 90 is affixed to the elongate body portion 73 whereby the elongate pin 72 is captive in the first and second hollow bores 21, 28 by the head element 75 and the securing element 90 and affixes the housing 105 to the structural frame 15.

In the illustrated embodiment, the securing element 90 is threadably affixed to the elongate body portion 73, and is typically a threaded nut 92 screwed to a threaded end 93 of the elongate body portion 73 of the elongate pin 72. Typically a washer is provided between the threaded nut 92 and the fitting mechanism 60. Alternatively, as described in the previous embodiments of Figures 4 to 6 and 7 to 9, the securing element 90 may comprise a clip which is fitted to a clip-engaging element at the opposite end of the elongate body portion 73, such as a spring clip removably fitted to the clip-engaging element.

In the embodiment of Figures 10 to 12, as described in the previous embodiments of Figures 4 to 6 and 7 to 9, the elongate pin 72 is the sole fitting element 94 in the respective fitting assembly 204 which affixes the housing 105 to the structural frame 15.

In the embodiments of the present invention described hereinabove with reference to Figures 4 to 6, Figures 7 to 9 and Figures 10 to 12, the nacelle cover is fitted to the structural frame by a plurality of elongate pins which have an integral head element fitted to the housing of the nacelle cover by an unthreaded connection. This provides the technical advantage that a simple, low cost, robust and easy to install and uninstall fitting assembly is provided. No external bolt or nut of the fitting assembly is provided, and so there is no need to tighten any exterior fitting, should it become loosened during service, by accessing the exterior of the nacelle cover. This facilitates the maintenance of the nacelle cover over its extended service life, typically up to 25 years. Also, there is no exterior bolt/nut fitting to be subjected to damage by corrosion.

In the embodiments of Figures 4 to 6 and Figures 7 to 9, there is no threaded connection on the elongate pin and the entire load is carried by the shear strength of the elongate pin. The clip remains securely in place fitted to the inner end of the elongate pin and the elongate pin does not require to be in tension, and consequently the fitting assembly is strong, robust and easy to design and install, and there is no need for in-service tightening of a threaded connection.

However, the embodiments of Figures 4 to 6 and 7 to 9 may be modified so that the securing element 48 is threadably affixed to the elongate body portion 35, and is typically a threaded nut screwed to a threaded end of the elongate body portion 35 of the elongate pin 34.

In the embodiment of Figures 10 to 12, if the interior threaded connection requires tightening during service, this can easily be conducted from within the interior space of the nacelle cover. At least part of the load between the housing and the structural frame is carried by the shear strength of the elongate pin. The elongate pin does not need to be under high tension. The head element of the elongate pin is captive and translationally fixed within the blind cavity in the first mount on the housing, but the blind cavity can be opened to permit removal of the head element from the blind cavity in a direction into the interior space. Therefore the elongate pin can easily be removed, and if desired replaced by a new elongate pin, by service personnel working within the interior space.

Thus the elongate pin fitting in accordance with the present invention is very easy and inexpensive to design, install and maintain over an extended service life, and is less likely to require adjustment during service than a conventional threaded bolt having threaded nuts fitted at opposite ends.

By providing that each fitting assembly comprises or consists of a single elongate pin, as the sole structural fitting element connecting the housing to the structural frame, which can rotate in the second mount, there is no need simultaneously to align all of the fitting assemblies, and the associated parts of the housing and the structural frame, prior to installing any of the fitting assemblies between the housing and the structural frame. This facilitates installation of the nacelle cover onto the structural frame.

Figure 2 shows schematically the mainshaft 150, mainshaft bearing 152, gearbox 154, generator 156 and transformer 158, although other components, i.e. the yaw system are provided.

For some wind turbines, the various machinery components are pre-assembled on the ground prior to the pre-assembly being installed within the nacelle cover after the nacelle cover has been fitted to the top of the tower. However, on some bigger wind turbines, the individual drivetrain components, for example the mainshaft, and gearbox, may often be individually installed into the nacelle cover after the nacelle cover is lifted to the top of the tower, since the final assembly may be too heavy to be carried by the crane.

In a typical embodiment of the present invention, the mainshaft bearing 152, the gearbox 154 are mounted on the bed plate frame 420, and the generator 156 is mounted on the main frame 250. The yaw system may be mounted to the bed plate frame 420. In contrast, the transformer 158, optional cooling system (not shown) and electrical control cabinets (not shown) are mounted, directly or indirectly, to the sidewalls 102, 103 within the nacelle cover 100 as described in greater detail hereinbelow. However, other arrangements of which machinery components are mounted on the bed plate frame 420, the main frame 250 and the sidewalls 102, 103 may be employed.

In the preferred embodiment of the present invention, the machinery component that is typically located the furthest rearmost distance from the front end 107 of the nacelle housing 105, e.g. the transformer 158, is mounted on the sidewalls 102, 103. Typically, the machinery component(s) 125 mounted on the sidewalls 102,103 have a total mass of up to 10 tonnes. Such a mass exerts a high turning moment from the combined mass of the housing 105 and the machinery component(s) 125 on the fixing of the housing 105 to the bed plate frame 420.

The machinery component(s) 125 may be directly mounted on the sidewalls 102, 103, using fitting mechanisms between the machinery component(s) and the sidewalls 102, 103. Alternatively, the machinery component(s) may be indirectly mounted on the sidewalls 102, 103, for example by using a reinforced area of the floor 104 which is fitted to the sidewalls 102, 103, a transverse an additional reinforced interior floor which is fitted to the sidewalls 102, 103, or a transverse support assembly which is fitted to the sidewalls 102, 103, for example transverse beams mounted between the sidewalls 102, 103, which is fitted directly to the sidewalls 102, 103, and mounting the machinery component(s) on the reinforced area of the floor 104, additional reinforced interior floor, or support assembly. In each of these constructions, which are schematically illustrated by one or more supports 254 shown in Figure 2, the mass and turning moment load of the machinery component(s) 125 are supported by the sidewalls 102, 103. Alternatively, one or more of these machinery component(s) may be indirectly mounted on the sidewalls 102, 103 by being mounted on the roof 101. Also, a crane (not shown) may be mounted on the roof 101.

The housing 105 comprises a structural tube 128 which functions as a vertically displaceable cantilever beam carrying the load, indicated by arrow Y, of the at least one machinery component 125 mounted thereon.

The at least one machinery component 125 is directly or indirectly mounted on the sidewalls 102, 103 of the housing 105 and the sidewalls 102,103 of the housing 105 directly or indirectly support the load of the at least one machinery component 125.

In contrast, the weight of the machinery component(s) 124 of the drive train mounted on the bed plate frame 420 and the main frame 250 is carried by, and transferred to the tower 122 by, the bed plate frame 420.

The machinery component(s) 125 that are mounted on the sidewalls 102,103 at a position laterally remote from the bed plate frame 420 have significant mass, typically a total of at least 1 tonne and up to 10 tonnes, or even up to 20 tonnes if these mounted machinery components include the transformer, and thereby exert a significant turning moment on the structural tube 128 which functions as a cantilever beam to support the load of the combination resulting from both the mass of the machinery component(s) 125 that are mounted on the sidewalls 102,105 and the mass of the portion of the housing 105 that is rearward of the tower 122.

The roof 101, opposite sidewalls 102, 103 and floor 104 are assembled at each longitudinally-extending corner 129, 130, 131, 132 of the housing 105 by at least one respective fixing mechanism (not shown) to form a structural joint at least partially along the respective longitudinally-extending corner 129, 130, 131, 132.

As a result of this construction, the opposite sidewalls 102, 103 comprise opposite load-bearing webs of the vertically displaceable cantilever beam to carry the turning moment load, of the housing 105 and the at least one machinery component 125 mounted on the housing 105, the turning moment being about the mounting to the bed plate frame 420. Furthermore, at least one or both of the roof 101 and floor 104 comprise a respective flange interconnecting the opposite load-bearing webs of the vertically displaceable cantilever beam. Accordingly, the vertically displaceable cantilever beam functions to support the vertical turning moment load in a manner similar to an I-beam, or a square hollow profile, with the opposite sidewalls 102, 103 functioning as opposite load-bearing webs and the roof 101 and/or the floor 104 functioning as flanges.

The structural tube 128 is thereby configured to resist a vertical load of at least 500kN, and a vertical bending moment of at least 3500kNm, applied to the housing 105 at a position laterally of the mounting between the front end 107 of the housing 105 and the bed plate frame 420 which is affixed to the tower 122.

In some embodiments, any of the roof 101, sidewalls 102, 103 and floor 104 may be provided with large openings covered by removable panels which can be temporarily opened to access the interior space 106. When such large openings are provided, the opposite wall element may be reinforced to enable that reinforced element to function as the flange of the respective cantilever beam. For example, when the roof 101 is provided with a large openable hatch to enable a crane to remove machinery components from the housing 105, the floor 104 may be reinforced to function as the flange for the vertically displaceable cantilever beam and/or the upper edges of the sidewalls 102, 103 may be reinforced to provide a respective top flange structure for each sidewall 102, 103. Furthermore, when one or more hatches are in a closed position, the hatches may enhance the strength and stiffness of the housing 105; in particular, the closed hatches may provide an increased snow load capability of the roof 101 of the housing 105.

Correspondingly, the roof 101 and floor 104 comprise opposite load-bearing webs of a horizontally displaceable cantilever beam to carry a lateral load, for example a wind load and/or a yawing load applied to the housing 105 about the mounting to the bed plate frame 420. Accordingly, the horizontally displaceable cantilever beam functions to support the horizontal turning moment resulting from an applied lateral wind load in a manner similar to an I-beam, or a square hollow profile, with the roof 101 and floor 104 functioning as opposite load-bearing webs and the opposite sidewalls 102, 103 functioning as flanges interconnecting the opposite load-bearing webs of the horizontally displaceable cantilever beam.

The structural tube 128 is thereby configured to resist a horizontal lateral load of at least 100kN, and a horizontal bending moment of at least 1200kNm, applied to the housing at a position laterally of the mounting between the front end 107 of the housing 105 and the bed plate frame 420 which is affixed to the tower 122.

Preferably, the structural joint along each longitudinally-extending corner 129, 130, 131, 132 has a shear strength of more than 120 kN/m.

Typically, the sidewalls 102, 103, and optionally each of the roof 101 and the floor 104, have an in-plane shear strength of from 25 to 40 N/mm² and an in-plane compression strength of from 200 to 250 N/mm². Furthermore, preferably the sidewalls 102, 103, and optionally each of the roof 101 and the floor 104, have a shear load strength of greater than 5 kN and a bending moment strength of greater than 6 kNm.

Accordingly, the housing 105 is structured to act as a vertical cantilever beam which carries the load of the machinery component(s) 125. This load can be sufficient to cause elastic deformation of the rear end 108 of the housing 105 in a downward direction. In addition, in winter snow can accumulate on the roof 101 to provide a significant additional snow load on the housing 105 which can cause elastic deformation of the rear end 108 of the housing 105 in a downward direction. The housing 105 needs to be able to flex downwardly relative to the bed plate frame 420 and the main frame 250 in order to be able to carry the load of the machinery component(s) 125 and any additional snow load.

Furthermore, the housing 105 is exposed to winds, which can apply a significant lateral (i.e. horizontal) load on the housing. The housing 105 is structured to act as a horizontal cantilever beam which carries the lateral wind load. This lateral load can be sufficient to cause elastic deformation of the rear end 108 of the housing 105 in a lateral (i.e. transverse) direction. The housing 105 needs to be able to flex laterally relative to the bed plate frame 420 and the main frame 250 in order to be able to carry the lateral wind load.

It is to be noted that in the figures the main machinery components are only shown schematically as examples. Furthermore no bolts or brackets are shown as securing means in the figures. It is however emphasized that such securing means are present. The composite nacelle cover shown in the figures is only one embodiment of a composite nacelle cover. Other designs of composite nacelle covers are within the scope of the present invention and the example shown in the figures is not exhaustive of the models and embodiments of composite nacelle covers that can implement and utilize the present invention. Also the designs of load-carrying frames shown in the figures are only examples, and load-carrying frames of multiple designs can be reduced in size, or be manufactured with reduced size for the purpose of the present invention.

## Claims

1. A nacelle for a wind turbine, wherein the nacelle (100) comprises a nacelle cover formed by an elongate housing (105) defining an interior space (106) for containing machinery components (125) of the wind turbine, the housing (105) having a front end (107) mounted to a tower (122) of the wind turbine, and an opposite rear end (108), wherein the elongate housing (105) comprises a fibre-reinforced polymer composite material, wherein the front end (107) of the housing (105) is mounted on a structural frame (15) which is affixed to the tower (122), the front end (107) is fitted to the structural frame (15) by a plurality of fitting assemblies (204), wherein at least one of the plurality of fitting assemblies (204) comprises a first mount (20) on the housing (105) which defines a first hollow bore (21) extending therethrough, a second mount (27) on the structural frame (15) which defines a second hollow bore (28) extending therethrough, the first and second hollow bores (21, 28) being aligned along a common axis (29), and an elongate pin (34;72) fitted within the first and second hollow bores (21, 28), wherein the elongate pin (34, 72) comprises an elongate body portion (35;73) having at one end (36; 74) thereof an integral, unthreaded head element (37; 75) which has a width greater than a width of the elongate body portion (35;73), the head element (37;75) being fitted to the first mount (20), and at the opposite end (47; 89) thereof a securing element (48; 90) affixed to the elongate body portion (35;73) whereby the elongate pin (34;72) is captive in the first and second hollow bores (21, 28) by the head element (37;75) and the securing element (48; 90) and affixes the housing (105) to the structural frame (15), wherein the structural frame (15) comprises a bed plate frame (420) and the bed plate frame (420) supports at least one part of a drive train (124) of the wind turbine, and the fitting assemblies (204) comprise first and second front fitting assemblies (204a, 204b) on respective opposite longitudinal sides of the housing (105) and third and fourth rear fitting assemblies (204c, 204d) on respective opposite longitudinal sides of the housing (105), wherein the rear fitting assemblies (204c, 204d) are longitudinally spaced along the housing (105) in a direction towards the rear end (108) relative to the front fitting assemblies (204a, 204b), and wherein each of the first and second front fitting assemblies (204a, 204b), or each of the third and fourth rear fitting assemblies (204c, 204d), or all of the first and second front fitting assemblies (204a, 204b) and the third and fourth rear fitting assemblies (204c, 204d), respectively comprise a respective first mount (20), second mount (27), elongate pin (34;72) and securing element (48; 90), wherein the second mount (27) of each of the first and second front fitting assemblies (204a, 204b) is on the bed plate frame (420).

2. A nacelle according to claim 1, wherein the first mount (20) defines a blind cavity (78) therein, the blind cavity (78) forming a closed end (79) of the first bore (21), and the head element (37, 75) is captive and translationally fixed within the blind cavity (78).

3. A nacelle according to claim 2, wherein the first mount (20) comprises an inner plate (84) which is affixed to an inner face (85) of an outer part (86) of the first mount (20), and the inner plate (84) comprises the first bore (21) and a load-bearing surface (87) which forms an inner end (88) of the blind cavity (78), the head element (75) having an inner-facing surface (76) fitted against the load-bearing surface (87), optionally wherein the outer part (86) of the first mount (20) comprises outer and inner reinforcing plates (80a, 80b) which are respectively fitted to outer and inner surfaces of the housing (105) and sandwich a wall portion (23) of the housing 105 therebetween, the outer reinforcing plate (80a) forms a closed end (82) of the blind cavity (78) and the inner reinforcing plate (80b) has a hole (96) defining a main body (83) of the blind cavity (78).

4. A nacelle according to claim 3, wherein (i) the head element (75) is cylindrical and the inner-facing surface (76) of the head element (75) is chamfered between the elongate body portion (73) and an outer cylindrical surface (77) of the head element (75) and/or (ii) the inner plate (84) is removably affixed to the inner face (85) of the outer part (86) of the first mount (20), whereby removal of the inner plate (84) opens the blind cavity (78) and permits removal of the head element (75) from the blind cavity (78) in a direction into the interior space (106).

5. A nacelle according to any one of claims 2 to 4, wherein (i) the securing element (90) is threadably affixed to the elongate body portion (73) and/or (ii) an elastomeric member (89) is positioned between the first and second mounts (20, 27) and/or (iii) the elongate pin (72) is entirely located at a position inwardly spaced from an outer surface (43) of the housing (105).

6. A nacelle according to any foregoing claim, wherein the elongate pin (34; 72) is the sole fitting element (51; 94) in the respective fitting assembly (204) which affixes the housing (105) to the structural frame (15).

7. A nacelle according to any foregoing claim, wherein each fitting assembly (204) comprises or consists of a single elongate pin (34; 72) as the sole structural fitting element (51; 94) connecting the housing (105) to the structural frame (15) and the elongate pin (34; 72) can rotate in the respective second mount (27).

8. A nacelle according to any foregoing claim, wherein the elongate body portion (35;73) and the integral, unthreaded head element (37;75) are symmetric about a longitudinal axis of rotation (X) of the elongate pin (34;72).

9. A nacelle according to any foregoing claim, wherein the second mount (27) comprises a reinforcing block member (30) which is fitted to the structural frame (15) and the elongate pin (34; 72) extends through the reinforcing block member (30) and a portion (31) of the structural frame (15).

10. A nacelle according to any one of claims 1 to 8, wherein the second mount (27) comprises a fitting mechanism (60) which is fitted to an upward-facing or downward-facing surface (62, 64) of the structural frame (15), wherein the fitting mechanism (60) comprises a first fitting block (65) affixed to the structural frame (15) and a second fitting block (66) affixed to the first fitting block (65), wherein each of the first and second fitting blocks (65, 66) respectively comprises a respective first or second groove (67, 68), and the first and second fitting blocks (65, 66) are affixed together so that the first and second grooves (67, 68) are aligned to define the second hollow bore (28) in the second mount (27).

11. A nacelle according to any foregoing claim, wherein all of the first and second front fitting assemblies (204a, 204b) and the third and fourth rear fitting assemblies (204c, 204d) comprise a respective first mount (20), second mount (27), elongate pin (34;72) and securing element (48; 90), and wherein the location of the second mount (27) on the structural frame (15) of each of the third and fourth rear fitting assemblies (204c, 204d) is higher on the structural frame (15) than the location of the second mount (27) of each of the first and second front fitting assemblies (204a, 204b).

12. A nacelle according to claim 11, wherein the first and second front fitting assemblies (204a, 204b) and the third and fourth rear fitting assemblies (204c, 204d) comprise rear and front fitting mechanisms (60) along each side of the housing (105) and structural frame (15) which are longitudinally spaced and at different heights and are respectively affixed to upward-facing and downward-facing surfaces (62, 64) of the structural frame (15), whereby at least part of a structural turning-moment load between the housing (1050 and the structural frame (15) is carried by the shear strength of the structural frame (15) which is between the rear and front fitting mechanisms (60).

13. A nacelle according to any foregoing claim, wherein the first mount (20) comprises outer and inner reinforcing plates (22a, 22b; 80a, 80b), optionally composed of metal, which are respectively fitted to outer and inner surfaces of the housing (105) and sandwich a wall portion (23) of the housing (105) therebetween to define the first hollow bore (21), and the outer and inner reinforcing plates (22a, 22b; 80a, 80b) are affixed together by at least one fixing member (25).

14. A nacelle according to any foregoing claim, wherein the structural frame (15) further comprises a main frame (250) which is fixed to the bed plate frame (420), the main frame (250) extending in a longitudinal direction along the housing (105) towards the rear end (108), wherein the main frame (250) supports at least one part of the drive train (124) of the wind turbine, wherein the second mount (27) of each of the third and fourth rear fitting assemblies (204a, 204b) is on the bed plate frame (420) or the main frame (250).

15. A nacelle according to any foregoing claim, wherein the housing (105) supports at least one machinery component (125) of the wind turbine which is mounted on the housing (105) at the rear end (108), and the housing (105) comprises a structural tube (128) which functions as a vertically displaceable cantilever beam carrying the load of the at least one machinery component (125) mounted thereon.

## Patentansprüche

1. Gondel für eine Windturbine, wobei die Gondel (100) eine Gondelabdeckung aufweist, die durch ein längliches Gehäuse (105) gebildet wird, das einen Innenraum (106) zum Aufnehmen von Maschinenkomponenten (125) der Windturbine definiert, wobei das Gehäuse (105) ein vorderes Ende (107), das an einem Turm (122) der Windturbine angebracht ist, und ein gegenüberliegendes hinteres Ende (108) hat, wobei das längliche Gehäuse (105) ein faserverstärktes Polymerverbundmaterial aufweist, wobei das vordere Ende (107) des Gehäuses (105) an einem strukturellen Rahmen (15) montiert ist, der am Turm (122) befestigt ist, das vordere Ende (107) am strukturellen Rahmen (15) durch mehrere Anbaugruppen (204) angebaut ist, wobei wenigstens eine der mehreren Anbaugruppen (204) eine erste Halterung (20) am Gehäuse (105), die eine erste hohle Bohrung (21) definiert, die sich dadurch erstreckt, eine zweite Halterung (27) am strukturellen Rahmen (15), die eine zweite hohle Bohrung (28) definiert, die sich dadurch erstreckt, wobei die ersten und zweiten hohlen Bohrungen (21, 28) entlang einer gemeinsamen Achse (29) ausgerichtet sind, und einen länglichen Stift (34; 72), der in den ersten und zweiten hohlen Bohrungen (21, 28) angebaut ist, aufweist, wobei der längliche Stift (34; 72) einen länglichen Körperabschnitt (35; 73) aufweist, der an einem Ende (36; 74) davon ein integrales, gewindeloses Kopfelement (37; 75) hat, das eine Breite größer als eine Breite des länglichen Körperabschnitts (35; 73) hat, wobei das Kopfelement (37; 75) an der ersten Halterung (20) angebaut ist, und am gegenüberliegenden Ende (47; 89) davon ein Sicherungselement (48; 90), das am länglichen Körperabschnitt (35; 73) befestigt ist, wodurch der längliche Stift (34; 72) in den ersten und zweiten hohlen Bohrungen (21, 28) durch das Kopfelement (37; 75) und das Sicherungselement (48; 90) in den ersten und zweiten Hohlbohrungen (21, 28) gefangen ist und das Gehäuse (105) an dem strukturellen Rahmen (15) befestigt, wobei der strukturelle Rahmen (15) einen Grundplattenrahmen (420) aufweist und der Grundplattenrahmen (420) wenigstens einen Teil eines Antriebsstrangs (124) der Windturbine trägt, und die Anbaugruppen (204) erste und zweite vordere Anbaugruppen (204a, 204b) an jeweiligen gegenüberliegenden Längsseiten des Gehäuses (105) und dritte und vierte hintere Anbaugruppen (204c, 204d) an jeweiligen gegenüberliegenden Längsseiten des Gehäuses (105) aufweisen, wobei die hinteren Anbaugruppen (204c, 204d) in Längsrichtung entlang des Gehäuses (105) in einer Richtung zum hinteren Ende (108) relativ zu den vorderen Anbaugruppen (204a, 204b) beabstandet sind, und wobei jede der ersten und zweiten vorderen Anbaugruppen (204a, 204b) oder jede der dritten und vierten hinteren Anbaugruppen (204c, 204d) oder alle der ersten und zweiten vorderen Anbaugruppen (204a, 204b) und der dritten und vierten hinteren Anbaugruppen (204c, 204d) jeweils eine jeweilige erste Halterung (20), zweite Halterung (27), länglichen Stift (34; 72) und Sicherungselement (48; 90) aufweisen, wobei die zweite Halterung (27) jeder der ersten und zweiten vorderen Anbaugruppen (204a, 204b) auf dem Grundplattenrahmen (420) ist.

2. Gondel nach Anspruch 1, wobei die erste Halterung (20) einen Blindhohlraum (78) darin definiert, wobei der Blindhohlraum (78) ein geschlossenes Ende (79) der ersten Bohrung (21) bildet, und das Kopfelement (37, 75) unverlierbar und translatorisch innerhalb des Blindhohlraums (78) fixiert ist.

3. Gondel nach Anspruch 2, wobei die erste Halterung (20) eine Innenplatte (84) aufweist, die an einer Innenfläche (85) eines Außenteils (86) der ersten Halterung (20) befestigt ist, und die Innenplatte (84) die erste Bohrung (21) und eine tragende Fläche (87) aufweist, die ein inneres Ende (88) des Blindhohlraums (78) bildet, wobei das Kopfelement (75) eine nach innen gerichtete Fläche (76) hat, die gegen die tragende Fläche (87) angebaut ist, wobei optional der äußere Teil (86) der ersten Halterung (20) äußere und innere Verstärkungsplatten (80a, 80b) aufweist, die jeweils an äußeren und inneren Flächen des Gehäuses (105) angebaut sind und einen Wandabschnitt (23) des Gehäuses (105) dazwischen einklemmen, wobei die äußere Verstärkungsplatte (80a) ein geschlossenes Ende (82) des Blindhohlraums (78) bildet und die innere Verstärkungsplatte (80b) ein Loch (96) hat, das einen Hauptkörper (83) des Blindhohlraums (78) definiert.

4. Gondel nach Anspruch 3, wobei (i) das Kopfelement (75) zylindrisch ist und die nach innen weisende Oberfläche (76) des Kopfelements (75) zwischen dem länglichen Körperabschnitt (73) und einer äußeren zylindrischen Oberfläche (77) des Kopfelements (75) abgeschrägt ist und/oder (ii) die Innenplatte (84) abnehmbar an der Innenfläche (85) des Außenteils (86) der ersten Halterung (20) befestigt ist, wodurch das Entfernen der Innenplatte (84) den Blindhohlraum (78) öffnet und das Entfernen des Kopfelements (75) aus dem Blindhohlraum (78) in einer Richtung in den Innenraum (106) ermöglicht.

5. Gondel nach einem der Ansprüche 2 bis 4, wobei (i) das Sicherungselement (90) an dem länglichen Körperabschnitt (73) schraubbar angebaut ist und/oder (ii) ein elastomeres Element (89) zwischen den ersten und zweiten Halterungen (20, 27) positioniert ist und/oder (iii) der längliche Stift (72) vollständig an einer Position angeordnet ist, die von einer Außenfläche (43) des Gehäuses (105) nach innen beabstandet ist.

6. Gondel nach einem der vorhergehenden Ansprüche, wobei der längliche Stift (34; 72) das einzige Anbauelement (51; 94) in der jeweiligen Anbaugruppe (204) ist, die das Gehäuse (105) am strukturellen Rahmen (15) befestigt.

7. Gondel nach einem der vorhergehenden Ansprüche, wobei jede Anbaugruppe (204) einen einzelnen länglichen Stift (34; 72) als das einziges strukturelle Anbauelement (51; 94) aufweist oder daraus besteht, das das Gehäuse (105) mit dem strukturellen Rahmen (15) verbindet, und der längliche Stift (34; 72) in der jeweiligen zweiten Halterung (27) drehen kann.

8. Gondel nach einem der vorhergehenden Ansprüche, wobei der längliche Körperabschnitt (35; 73) und das integrale, gewindelose Kopfelement (37; 75) um eine Längsdrehachse (X) des länglichen Stifts (34; 72) symmetrisch sind.

9. Gondel nach einem der vorhergehenden Ansprüche, wobei die zweite Halterung (27) ein Verstärkungsblockelement (30) aufweist, das an dem strukturellen Rahmen (15) angebaut ist, und der längliche Stift (34; 72) sich durch das Verstärkungsblockelement (30) und einen Teil (31) des strukturellen Rahmens (15) erstreckt.

10. Gondel nach einem der Ansprüche 1 bis 8, wobei die zweite Halterung (27) einen Anbaumechanismus (60) aufweist, der an einer nach oben weisenden oder nach unten weisenden Fläche (62, 64) des strukturellen Rahmens (15) angebracht ist, wobei der Anbaumechanismus (60) einen ersten Anbaublock (65), der am strukturellen Rahmen (15) befestigt ist, und einen zweiten Anbaublock (66), der am ersten Anbaublock (65) befestigt ist, aufweist, wobei jeder der ersten und zweiten Anbaublöcke (65, 66) jeweils eine entsprechende erste oder zweite Nut (67, 68) aufweist und die ersten und zweiten Anbaublöcke (65, 66) so aneinander befestigt sind, dass die ersten und zweiten Nuten (67, 68) ausgerichtet sind, um die zweite hohle Bohrung (28) in der zweiten Halterung (27) zu definieren.

11. Gondel nach einem der vorhergehenden Ansprüche, wobei alle der ersten und zweiten vorderen Anbaugruppen (204a, 204b) und der dritten und vierten hinteren Anbaugruppen (204c, 204d) eine erste Halterung (20), eine zweite Halterung (27), einen länglichen Stift (34; 72) und ein Sicherungselement (48; 90) aufweisen, und wobei die Position der zweiten Halterung (27) am strukturellen Rahmen (15) jeder der dritten und vierten hinteren Anbaugruppen (204c, 204d) höher auf dem strukturellen Rahmen (15) ist als die Position der zweiten Halterung (27) jeder der ersten und zweiten vorderen Anbaugruppen (204a, 204b).

12. Gondel nach Anspruch 11, wobei die ersten und zweiten vorderen Anbaugruppen (204a, 204b) und die dritten und vierten hintere Anbaugruppe (204c, 204d) hintere und vordere Anbaumechanismen (60) entlang jeder Seite des Gehäuses (105) und des strukturellen Rahmens (15) aufweisen, die in Längsrichtung beabstandet sind und bei unterschiedlichen Höhen sind und jeweils an nach oben weisenden und nach unten weisenden Flächen (62, 64) des strukturellen Rahmens (15) befestigt sind, wodurch wenigstens ein Teil einer strukturellen Drehmomentbelastung zwischen dem Gehäuse (105) und dem strukturellen Rahmen (15) durch die Scherfestigkeit des strukturellen Rahmens (15) getragen wird, der sich zwischen den hinteren und vorderen Anbaumechanismen (60) befindet.

13. Gondel nach einem der vorhergehenden Ansprüche, wobei die erste Halterung (20) äußere und innere Verstärkungsplatten (22a, 22b; 80a, 80b), die wahlweise aus Metall bestehen, aufweist, die jeweils an äußeren und inneren Flächen des Gehäuses (105) angebaut sind und einen Wandabschnitt (23) des Gehäuses (105) dazwischen einschließen, um die erste hohle Bohrung (21) zu definieren, und die äußeren und inneren Verstärkungsplatten (22a, 22b; 80a, 80b) durch wenigstens ein Befestigungselement (25) aneinander befestigt sind.

14. Gondel nach einem der vorhergehenden Ansprüche, wobei der strukturelle Rahmen (15) ferner einen Hauptrahmen (250) aufweist, der am Grundplattenrahmen (420) befestigt ist, wobei sich der Hauptrahmen (250) in einer Längsrichtung entlang des Gehäuses (105) zum hinteren Endes (108) erstreckt, wobei der Hauptrahmen (250) wenigstens einen Teil des Antriebsstrangs (124) der Windturbine trägt, wobei die zweite Halterung (27) jeder der dritten und vierten hinteren Anbaugruppen (204a, 204b) auf dem Grundplattenrahmen (420) oder dem Hauptrahmen (250) ist.

15. Gondel nach einem der vorhergehenden Ansprüche, wobei das Gehäuse (105) wenigstens eine Maschinenkomponente (125) der Windturbine trägt, die am Gehäuse (105) am hinteren Ende (108) montiert ist, und das Gehäuse (105) ein Strukturrohr (128) aufweist, das als ein vertikal verschiebbarer Auslegerbalken fungiert, der die Last der wenigstens einen daran montierten Maschinenkomponente (125) trägt.

## Revendications

1. Nacelle pour une éolienne, dans laquelle la nacelle (100) comprend un couvercle de nacelle formé d'un boîtier allongé (105) définissant un espace intérieur (106) servant à contenir des composants de machinerie (125) de l'éolienne, le boîtier (105) ayant une extrémité avant (107) montée sur une tour (122) de l'éolienne et une extrémité arrière à l'opposé (108), dans laquelle le boîtier allongé (105) comprend un matériau composite polymère renforcé de fibres, dans laquelle l'extrémité avant (107) du boîtier (105) est montée sur un cadre structurel (15) qui est fixé à la tour (122) et l'extrémité avant (107) est ajustée au cadre structurel (15) par une pluralité d'ensembles raccords (204), dans laquelle au moins l'un de la pluralité d'ensembles raccords (204) comprend un premier support (20) sur le boîtier (105) qui définit un premier alésage creux (21) s'étendant à travers celui-ci, un deuxième support (27) sur le cadre structurel (15) qui définit un deuxième alésage creux (28) s'étendant à travers celui-ci, les premier et deuxième alésages creux (21, 28) étant alignés le long d'un axe commun (29), et une broche allongée (34 ; 72) ajustée à l'intérieur des premier et deuxième alésages creux (21, 28), dans laquelle la broche allongée (34, 72) comprend une portion de corps allongée (35 ; 73) qui dispose, à une de ses extrémités (36 ; 74), d'un élément de tête intégral non fileté (37 ; 75) qui a une largeur supérieure à la largeur de la portion de corps allongée (35 ; 73), l'élément de tête (37 ; 75) étant ajusté au premier support (20), et dispose, à son extrémité opposée (47 ; 89), d'un élément de fixation (48 ; 90) fixé à la portion de corps allongée (35 ; 73), moyennant à quoi la broche allongée (34 ; 72) se retrouve captive dans les premier et deuxième alésages creux (21, 28) par le biais de l'élément de tête (37 ; 75) et de l'élément de fixation (48 ; 90) et fixe le boîtier (105) au cadre structurel (15), dans laquelle le cadre structurel (15) comprend un cadre de plaque de base (420) et le cadre de plaque de base (420) supporte au moins une partie d'un train d'entraînement (124) de l'éolienne, et les ensembles raccords (204) comprennent des premier et deuxième ensembles raccords avant (204a, 204b) sur des côtés longitudinaux opposés respectifs du boîtier (105) et des troisième et quatrième ensembles raccords arrière (204c, 204d) sur des côtés longitudinaux opposés respectifs du boîtier (105), dans laquelle les ensembles raccords arrière (204c, 204d) sont espacés longitudinalement le long du boîtier (105) dans une direction vers l'extrémité arrière (108) par rapport aux ensembles raccords avant (204a, 204b), et dans laquelle chacun des premier et deuxième ensembles raccords avant (204a, 204b) ou chacun des troisième et quatrième ensembles raccords arrière (204c, 204d) ou la totalité des premier et deuxième ensembles raccords avant (204a , 204b) et des troisième et quatrième ensembles raccords arrière (204c, 204d) comprend respectivement un premier support respectif (20), un deuxième support respectif (27), une broche allongée respective (34 ; 72) et un élément de fixation respectif (48 ; 90), dans laquelle le deuxième support (27) de chacun des premier et deuxième ensembles raccords avant (204a, 204b) est sur le cadre de plaque de base (420).

2. Nacelle selon la revendication 1, dans laquelle le premier support (20) y définit une cavité borgne (78), la cavité borgne (78) formant une extrémité fermée (79) du premier alésage (21), et l'élément de tête (37, 75) se retrouve captif et fixé en translation à l'intérieur de la cavité borgne (78).

3. Nacelle selon la revendication 2, dans laquelle le premier support (20) comprend une plaque intérieure (84) qui est fixée à une face intérieure (85) d'une partie extérieure (86) du premier support (20), et la plaque intérieure (84) comprend le premier alésage (21) et une surface porteuse (87) qui forme une extrémité intérieure (88) de la cavité borgne (78), l'élément de tête (75) ayant une surface tournée vers l'intérieur (76) qui est ajustée contre la surface porteuse (87), éventuellement dans laquelle la partie extérieure (86) du premier support (20) comprend des plaques de renfort extérieure et intérieure (80a, 80b) qui sont respectivement ajustées aux surfaces extérieure et intérieure du boîtier (105) et qui prennent une portion de paroi (23) du boîtier (105) en sandwich, la plaque de renforcement extérieure (80a) forme une extrémité fermée (82) de la cavité borgne (78) et la plaque de renfort intérieure (80b) a un trou (96) définissant un corps principal (83) de la cavité borgne (78).

4. Nacelle selon la revendication 3, dans laquelle : (i) l'élément de tête (75) est cylindrique et la surface tournée vers l'intérieur (76) de l'élément de tête (75) est chanfreinée entre la portion de corps allongée (73) et une surface cylindrique extérieure (77) de l'élément de tête (75) ; et/ou (ii) la plaque intérieure (84) est fixée de manière amovible à la face intérieure (85) de la partie extérieure (86) du premier support (20), moyennant quoi le retrait de la plaque intérieure (84) ouvre la cavité borgne (78) et permet le retrait de l'élément de tête (75) depuis la cavité borgne (78) en direction de l'espace intérieur (106).

5. Nacelle selon l'une quelconque des revendications 2 à 4, dans laquelle : (i) l'élément de fixation (90) est fixé par filetage à la portion de corps allongée (73) ; et/ou (ii) un élément élastomère (89) est positionné entre les premier et deuxième supports (20, 27) ; et/ou (iii) la broche allongée (72) est entièrement située à un emplacement espacé vers l'intérieur d'une surface extérieure (43) du boîtier (105).

6. Nacelle selon l'une quelconque des revendications précédentes, dans laquelle la broche allongée (34 ; 72) est le seul élément d'ajustage (51 ; 94) dans l'ensemble raccord respectif (204) qui fixe le boîtier (105) au cadre structurel (15).

7. Nacelle selon l'une quelconque des revendications précédentes, dans laquelle chaque ensemble raccord (204) comprend ou consiste en une seule broche allongée (34 ; 72) comme étant le seul élément d'ajustage structurel (51 ; 94) reliant le boîtier (105) au cadre structurel (15), et la broche allongée (34 ; 72) peut tourner dans le deuxième support respectif (27).

8. Nacelle selon l'une quelconque des revendications précédentes, dans laquelle la portion de corps allongée (35 ; 73) et l'élément de tête intégral non fileté (37 ; 75) sont symétriques par rapport à un axe de rotation longitudinal (X) de la broche allongée (34 ; 72).

9. Nacelle selon l'une quelconque des revendications précédentes, dans laquelle le deuxième support (27) comprend un élément de bloc de renforcement (30) qui est ajusté au cadre structurel (15), et la broche allongée (34 ; 72) s'étend à travers l'élément de bloc de renforcement. (30) et une portion (31) du cadre structurel (15).

10. Nacelle selon l'une quelconque des revendications 1 à 8, dans laquelle le deuxième support (27) comprend un mécanisme d'ajustement (60) qui est ajusté à une surface tournée vers le haut ou vers le bas (62, 64) du cadre structurel. (15), dans laquelle le mécanisme d'ajustement (60) comprend un premier bloc d'ajustement (65) fixé au cadre structurel (15) et un deuxième bloc d'ajustement (66) fixé au premier bloc d'ajustement (65), dans laquelle chacun des premier et deuxième blocs d'ajustement (65, 66) comprend respectivement une première ou deuxième rainure respective (67, 68), et les premier et deuxième blocs d'ajustement ( 65, 66) sont fixés ensemble de sorte que les première et deuxième rainures (67, 68) sont alignées pour définir le deuxième alésage creux (28) dans le deuxième support (27).

11. Nacelle selon l'une quelconque des revendications précédentes, dans laquelle la totalité des premier et deuxième ensembles raccords avant (204a, 204b) et des troisième et quatrième ensembles raccords arrière (204c, 204d) comprennent respectivement un premier support (20), un deuxième support (27), une broche allongée (34 ; 72) et un élément de fixation (48 ; 90), et dans laquelle l'emplacement du deuxième support (27) sur le cadre structurel (15) de chacun des troisième et quatrième ensembles raccords arrière (204c, 204d) est plus haut sur le cadre structurel (15) que l'emplacement du deuxième support (27) de chacun des premier et deuxième ensembles raccords avant (204a, 204b).

12. Nacelle selon la revendication 11, dans laquelle les premier et deuxième ensembles raccords avant (204a, 204b) et les troisième et quatrième ensembles raccords arrière (204c, 204d) comprennent des mécanismes d'ajustement arrière et avant (60) le long de chaque côté du boîtier (105) et du cadre structurel (15) qui sont espacés longitudinalement et à des hauteurs différentes, et qui sont respectivement fixés à des surfaces tournées vers le haut et vers le bas (62, 64) du cadre structurel (15), moyennant quoi au moins une partie d'une charge de moment de rotation structurelle entre le boîtier (105) et le cadre structurel (15) est supportée par la résistance au cisaillement du cadre structurel (15) qui se trouve entre les mécanismes raccords arrière et avant (60).

13. Nacelle selon l'une quelconque des revendications précédentes, dans laquelle le premier support (20) comprend des plaques de renfort extérieure et intérieure (22a, 22b ; 80a, 80b), éventuellement composées de métal, qui sont ajustées respectivement aux surfaces extérieure et intérieure du boîtier (105) et prennent en sandwich une portion de paroi (23) du boîtier (105) entre elles afin de définir le premier alésage creux (21), et les plaques de renfort extérieure et intérieure (22a, 22b ; 80a, 80b) sont fixées ensemble par au moins un élément de fixation (25).

14. Nacelle selon l'une quelconque des revendications précédentes, dans laquelle le cadre structurel (15) comprend en outre un cadre principal (250) qui est fixé au cadre de plaque de base (420), le cadre principal (250) s'étendant dans une direction longitudinale le long du boîtier (105) vers l'extrémité arrière (108), dans laquelle le cadre principal (250) supporte au moins une partie de la chaîne cinématique (124) de l'éolienne, dans laquelle le deuxième support (27) de chacun des troisième et quatrième ensembles raccords arrière (204c, 204d) se situe suer le cadre de plaque de base (420) ou sur le cadre principal (250).

15. Nacelle selon l'une quelconque des revendications précédentes, dans laquelle le boîtier (105) supporte au moins un composant de machinerie (125) de l'éolienne qui est monté sur le boîtier (105) à l'extrémité arrière (108), et le boîtier (105) comprend un tube structurel (128) qui fonctionne en tant que poutre en porte-à-faux déplaçable verticalement qui supporte la charge dudit au moins un composant de machinerie (125) monté sur celle-ci.
